# EUROPEAN PATENT SPECIFICATION

(11) **EP 4 084 268 B1**
(45) Date of publication and mention of the grant of the patent: **03.09.2025**
(21) Application number: 21872897.0
(22) Date of filing: 23.09.2021
(51) Int. Cl.: H02J 7/00, H01M 10/44, H01M 10/42, H02J 7/04

(54) **BATTERY CELL CHARGING/DISCHARGING JIG CAPABLE OF CONNECTING TO MULTIPLE POWER SOURCES, AND BATTERY CELL CHARGING/DISCHARGING SYSTEM INCLUDING SAME**
LADE-/ENTLADEVORRICHTUNG FÜR BATTERIEZELLEN MIT ANSCHLUSSFÄHIGKEIT AN MEHRERE ENERGIEQUELLEN UND BATTERIEZELLENLADE-/ENTLADESYSTEM DAMIT
OUTIL DE CHARGE/DÉCHARGE D'ÉLÉMENTS DE BATTERIE POUVANT SE CONNECTER À DE MULTIPLES SOURCES D'ÉNERGIE ET SYSTÈME DE CHARGE/DÉCHARGE D'ÉLÉMENTS DE BATTERIE LE COMPRENANT

(30) Priority: 24.09.2020 KR 20200124181
(43) Date of publication of application: 02.11.2022
(73) Proprietor: LG Energy Solution, Ltd., Seoul 07335 (KR)
(72) Inventor: LEE, Ji Sun, Daejeon 34122 (KR)
(74) Representative: Goddar, Heinz J.
(86) International application number: PCT/KR2021/012943
(87) International publication number: WO 2022/065869

(56) References cited:
- CN-A- 106 970 251
- JP-A- 2013 005 558
- JP-A- 2020 087 880
- KR-A- 20180 110 831
- KR-B1- 101 649 333
- US-A1- 2016 204 624

## Description

### [Technical Field]

This application claims the benefit of priority based on Korean Patent Application No. 10-2020-0124181, filed on September 24, 2020.

The present invention provides a jig for charging and discharging a battery cell to which a new power supply scheme has been applied, and a system for charging and discharging a battery cell including the jig.

### [Background Art]

In recent years, as the price of energy sources increases due to the depletion of fossil fuels and the interest of environmental pollution is amplified, the demand for environmentally friendly alternative energy sources has become an indispensable factor for future life. As such, various researches on power generation technologies such as nuclear power, solar power, wind power, and tidal power have been continued, and electric power storage devices for more efficient use of such generated energy have also been attracting much attention.

In particular, with the development of technology and demand for mobile devices, the demand for batteries as energy sources is rapidly increasing, and accordingly, a lot of researches on batteries capable of meeting various demands have been conducted.

Typically, in terms of the shape of the battery, there is a high demand for a prismatic secondary battery and a pouch-type secondary battery that can be applied to products such as mobile phones with a small thickness. In terms of materials, there is a high demand for lithium secondary batteries such as lithium ion batteries and lithium ion polymer batteries having advantages such as high energy density, discharge voltage, and output stability.

A secondary battery is manufactured by accommodating an electrode assembly in a battery case and injecting electrolyte, followed by a battery activation step. At this time, the battery activation step includes the process of charging and discharging the secondary battery in the conditions necessary for activation after mounting the secondary battery in a cell jig. Such a cell jig is mainly used to charge or discharge the secondary battery in the battery activation step, as well as used for performance evaluation purposes of the secondary battery.

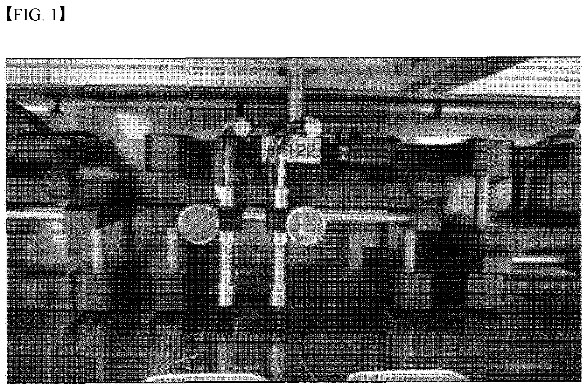

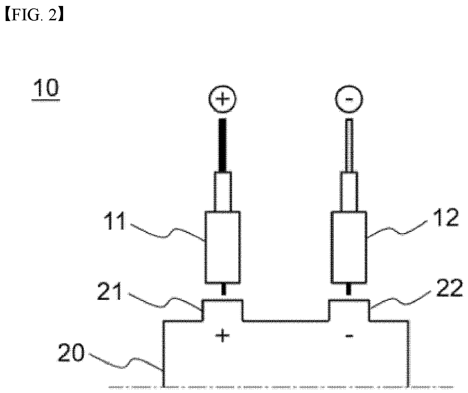

FIG. 1 is a photograph showing a power terminal which connects an external power source to a conventional jig for charging and discharging a battery cell, and FIG. 2 is a schematic diagram showing a structure of fastening a power terminal which connects an external power source to a socket fastening unit in a conventional jig for charging and discharging a battery cell. Referring to FIGS. 1 and 2, a conventional jig 10 for charging and discharging a battery cell includes a battery cell 20 fixed at the jig 10 and first and second terminal portions 21 and 22 electrically connected to first and second electrode leads of the battery cell 20. Further, the first and second terminal portions 21 and 22 are electrically connected to a power supply unit. Specifically, a first power terminal 11 of the power supply unit is connected to the first terminal portion 21 of the jig 10, and a second power terminal 12 of the power supply unit is connected to the second terminal portion 22 of the jig 10. In this case, the power supply unit is electrically connected to one jig 10. Further, if the standard of the battery cell 20 housed in the jig 10 is changed, there is a problem that the power supply unit should be replaced.

Hence, there is a need for a new charge and discharge technology that can efficiently charge and discharge battery cells 20 without replacement of a power supply unit even in the case that the standard of the battery cell 20 is changed or a plurality of battery cells 20 should be simultaneously charged and discharged.

CN 106 970 251 A describes a clamp for testing a square module cell. The clamp comprises a base plate, two side clamp plates, an upper clamp plate and explosion-proof glass panels. The side clamp plates are vertically fixed on the upper surface of the base plate and are parallel to each other. Two ends of the upper clamp plate are detachably fixed on the upper surfaces of the side clamp plates. The base plate, the side clamp plates and the upper clamp plate form a frame body together. The explosion-proof glass panels are fixed on openings in two sides of the frame body. A to-be-detected cell is arranged in the frame body. Positive and negative electrodes of the to-be-detected cell are connected with threaded columns. Multiple first through holes matched with the threaded columns are arranged in the upper clamp plate. The threaded columns are vertically arranged and penetrate through the first through holes. The threaded columns can be connected with each other through a connection sheet.

### [Disclosure]

### [Technical Problem]

In order to solve the above problems of the prior art, the present invention provides a jig for charging and discharging a battery cell to which a new power supply scheme has been applied, and a system for charging and discharging a battery cell including the jig.

### [Technical Solution]

The present invention provides a jig according to claim 1 and a system according to claim 8.

In one example, at least one of the connection sockets is a socket for serial connection and at least one of the connection sockets is a socket for parallel connection.

In a specific example, the socket for serial connection is electrically connected to another battery cell in series or is electrically connected to a power supply unit, and the socket for parallel connection is electrically connected to anther battery cell in parallel.

In another specific example, the socket fastening unit includes a number of p sockets for serial connection and a number of q sockets for parallel connection as the connection sockets. Herein, the p is a positive integer between 1 and 20, and the q is a positive integer between 1 and 20.

In another example, the one end of the socket fastening unit is fastened to the first terminal portion of the battery cell fixed at the fixing unit. Further, connection sockets formed at the other end of the socket fastening unit include one or more sockets for serial connection and one or more sockets for parallel connection, which satisfy at least one of:
(1) a condition that at least one of the sockets for serial connection is electrically connected to a power supply unit;
(2) a condition that at least one of the sockets for serial connection is electrically connected to a second terminal portion of another battery cell adjacent to the battery cell; and
(3) a condition that at least one of the sockets for parallel connection is electrically connected to a first terminal portion of another battery cell adjacent to the battery cell.

According to the present invention, at least one electrical connection pin is formed at the one end of the socket fastening unit, and at least one groove for accommodating the electrical connection pin is formed at the other end of the socket fastening unit.

In a specific example, the fixing unit presses two surfaces of the battery cell through a pressing plate, and the first and second terminal portions are electrically connected to first and second electrode leads, respectively, in a state that the first and second electrode leads of the battery cell are fixed.

In another specific example, the fixing unit presses two surfaces of the battery cell through a pressing plate, and further includes at least one of: a pressure sensor which measures pressure of the battery cell; and a temperature sensor which measures a temperature of the battery cell.

Further, the present invention provides a system for charging and discharging a battery cell, which includes the above-described jig for charging and discharging a battery cell. In one example, the system includes: a number of n jigs for charging and discharging a battery cell; and a power supply unit. Herein, the n is a positive integer equal to or greater than 2.

In one example, the number of n jigs are arranged in series or in parallel in a state that has accommodated battery cells.

In a specific example, the power supply unit is a single power source, and the number of n jigs are electrically connected to each other in at least one of a serial connection scheme and a parallel connection scheme in a state that has accommodated battery cells.

In another specific example, a power connection line, which is fastened to a connection socket formed at a socket fastening unit of each jig, is switched to satisfy a rated voltage condition of the battery cell.

### [Advantageous Effects]

A jig for charging and discharging a battery cell according to the present invention, and a system for charging and discharging a battery cell including the jig allow battery cell of various standards to be charged and discharged by changing electric connection schemes according to the rated voltage of the battery cell.

### [Brief Description of the Drawings]

FIG. 1 is a photograph showing a power terminal which connects an external power source to a conventional jig for charging and discharging a battery cell.
FIG. 2 is a schematic diagram showing a structure of fastening a power terminal which connects an external power source to a socket fastening unit in a conventional jig for charging and discharging a battery cell.
FIG. 3 is a schematic diagram showing a structure of fastening a power terminal which connects an external power source to a socket fastening unit in a jig for charging and discharging a battery cell according to one embodiment of the present invention.
FIG. 4 is a plan view showing a socket fastening unit in a jig for charging and discharging a battery cell according to one embodiment of the present invention.

### [Detailed Description of the Preferred Embodiments]

As the inventive concept allows for various changes and numerous embodiments, particular embodiments will be illustrated in the drawings and described in detail in the text. However, this is not intended to limit the present invention to the specific form disclosed, and it should be understood to include all changes, equivalents, and substitutes included in the scope of the present invention.

In this application, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof. Also, when a portion such as a layer, a film, an area, a plate, etc. is referred to as being "on" another portion, this includes not only the case where the portion is "directly on" the another portion but also the case where further another portion is interposed therebetween. On the other hand, when a portion such as a layer, a film, an area, a plate, etc. is referred to as being "under" another portion, this includes not only the case where the portion is "directly under" the another portion but also the case where further another portion is interposed therebetween. In addition, to be disposed "on" in the present application may include the case disposed at the bottom as well as the top.

The present invention provides a jig for charging and discharging a battery cell. In one example, a jig for charging and discharging a battery cell includes: a fixing unit which fixes a battery cell; first and second terminal portions which are electrically connected to first and second electrode leads of the fixed battery cell, respectively; and a socket fastening unit which has one end fastened to the first terminal portion or the second terminal portion, and the other end having two or more connection sockets to be electrically connected to an external side.

The jig for charging and discharging a battery cell according to the present invention includes a socket fastening unit for connecting the jig to an external power source, and the socket fastening unit may implement various electric connections. For example, the socket fastening unit has a structure in which a plurality of connection lines can be fastened in a multi-tap scheme. As such, even if the battery cell standard is changed, the jig for charging and discharging a battery cell according to the present invention can derive charge and discharge conditions which satisfy the changed battery cell standard. In some cases, the jig for charging and discharging a battery cell can simultaneously charge and discharge battery cells of different standards.

In one embodiment, the socket fastening unit has a plurality of connection sockets. Specifically, at least one of the connection sockets is a socket for serial connection and at least one of the connection sockets is a socket for parallel connection. For example, the socket for serial connection is electrically connected to another battery cell in series or is electrically connected to a power supply unit, and the socket for parallel connection is electrically connected to anther battery cell in parallel. The socket for serial connection may be electrically connected to another battery cell in series and may be electrically connected to the power supply unit if necessary. Further, the socket for parallel connection may be electrically connected to another battery cell in parallel. It may be changed according to the standard of the battery cell, but for example, when the voltage applied to the power supply unit is the same as the charge and discharge voltage of the battery cell, direct electric connection is made with the power supply unit through the socket for serial connection. Further, electric serial connection is made with the terminal portion of another adjacent jig so that the same voltage may be applied to the battery cell accommodated in an adjacent jig. In another example, when the voltage applied to the power supply unit is different from the charge and discharge voltage of the battery cell, electric connection is made with the power supply unit through the socket for parallel connection, and electric parallel connection is made with the terminal portion of another adjacent jig. Through this, the charge and discharge voltage required in the battery cell is made to fit the voltage applied from the power supply unit.

**In** a specific example, in the jig for charging and discharging a battery cell according to the present invention, the socket fastening unit includes a number of p sockets for serial connection and a number of q sockets for parallel connection as the connection sockets. Herein, the p is a positive integer between 1 and 20, and the q is a positive integer between 1 and 20. Specifically, the connection sockets of the socket fastening unit include 1 to 5 sockets for serial connection and 1 to 5 sockets for parallel connection. More specifically, the connection sockets of the socket fastening unit include 2 sockets for serial connection and 2 sockets for parallel connection. For example, the socket fastening unit includes 4 connection sockets which are arranged in a 2 x 2 form. 2 connection sockets at the upper end of the socket fastening unit are sockets for serial connection, and 2 connection sockets at the lower end of the socket fastening unit are sockets for parallel connection. Through this, a plurality of jigs are electrically connected in series/in parallel so that the charge and discharge standard of the battery cell correspond to the voltage applied from the power supply unit.

In one embodiment, in a jig for charging and discharging a battery cell according to the present invention, the one end of the socket fastening unit is fastened to the first terminal portion of the battery cell fixed at the fixing unit, and connection sockets formed at the other end of the socket fastening unit include one or more sockets for serial connection and one or more sockets for parallel connection, which satisfy at least one of: (1) a condition that at least one of the sockets for serial connection is electrically connected to a power supply unit; (2) a condition that at least one of the sockets for serial connection is electrically connected to a second terminal portion of another battery cell adjacent to the battery cell; and (3) a condition that at least one of the sockets for parallel connection is electrically connected to a first terminal portion of another battery cell adjacent to the battery cell.

For example, the power applied from the power supply unit is 9V, the charge and discharge standard of the battery cell is 4.5V, and 48 battery cells are simultaneously charged and discharged. In this case, the first connection socket is fastened to (+) terminal of the power supply unit. At this time, the second connection socket of the first jig is electrically connected to the second jig in series. Through this, 4.5V voltage is applied to the battery cell of the first jig and the second jig, respectively. The third connection socket of the first jig is electrically connected to other 24 jigs in parallel, and are sequentially, electrically connected to further other 24 jigs through the second jig connection sockets. Further, one of the second jig connection sockets is fastened to (-) terminal of the power supply unit. Through this process, 4.5V power is applied to all of 48 battery cells.

Specifically, in a system in which a plurality of jigs for charging and discharging a battery cell described above are assembled, in one or more jigs, the socket fastening unit satisfies two or three of the above conditions. In some cases, in one or more other jigs, the socket fastening unit satisfies one of the above conditions.

In a specific example, in a jig for charging and discharging a battery cell according to the present invention, at least one electrical connection pin is formed at the one end of the socket fastening unit, and at least one groove for accommodating the electrical connection pin is formed at the other end of the socket fastening unit. In the present invention, the specific shape of the socket formed in the socket fastening unit is not particularly limited. According to the present invention, at one end of the socket fastening unit, a connection pin is protruded to be inserted into a jig terminal to thereby be electrically connected, and at the other end of the socket fastening unit, a plurality of connection sockets are formed, and each of the connection sockets has a groove for accommodating a connection pin for electric connection. In some cases, a fastening by a screw may be added in a state that the connection pin has been inserted.

In another embodiment, the jig for charging and discharging a battery cell fixes a battery cell using a fixing unit, and the fixing unit presses both surfaces of the battery cell using a pressing plate. In this case, the first and second terminal portions may be electrically connected to first and second electrode leads, respectively, in a state that the first and second electrode leads of the battery cell are fixed.

The jig for charging and discharging a battery cell according to the present invention may selectively fix only the electrode lead portion without a separate pressing plate. However, when applied to the activation process of the battery cell, it is advantageous to press both surfaces of the battery cell using a pressing plate in order to smoothly discharge gas trapped in the battery cell. The pressing plate includes first and second pressing plates facing each other, and the battery cell may be charged/discharged and pressed in a state that the battery cell is interposed between the first and second pressing plates.

In another example, the fixing unit presses two surfaces of the battery cell through a pressing plate, and further includes at least one of: a pressure sensor which measures pressure of the battery cell; and a temperature sensor which measures a temperature of the battery cell. According to a jig for charging and discharging a battery cell of the present invention, it is possible to determine whether a battery cell is defective by examining the swelling degree of the battery charging and discharging system using a pressure sensor and determine a heated degree of the battery cell using a temperature sensor.

Further, the present invention provides a system for charging and discharging a battery cell, which includes the above-described jig for charging and discharging a battery cell. In one example, the system includes: a number of n jigs for charging and discharging a battery cell; and a power supply unit. Herein, the n is a positive integer equal to or greater than 2. The number n of the jigs for charging and discharging a battery cell corresponds to the number of battery cells to be charged and discharged at a time. For example, the number of the jig for charging and discharging a battery cell is in the range of 2 to 100, 10 to 80, or 20 to 60. For example, one battery module is formed by combining 48 battery cells, and when the battery cells accommodated in the battery module are charged and discharged at a time, 48 jigs for charging and discharging a battery cell are applied to charge and discharge the battery cells.

Further, when the number of n jigs for charging and discharging a battery cell charge and discharge battery cells in a state that has accommodated the battery cells, respectively, the jigs for charging and discharging a battery cell may be arranged in series and/or in parallel in order to allow the voltage of the power applied from the power supply unit to correspond to the rated voltage of the battery cell.

In a specific example, the power supply unit is a single power source, and the number of n jigs are electrically connected to each other in at least one of a serial connection scheme and a parallel connection scheme in a state that has accommodated battery cells. For example, battery cells accommodated in 48 battery cell jigs may be simultaneously charged and discharged using a single power supply unit.

When a plurality of battery cells are simultaneously charged and discharged, the power connection line, which is fastened to the connection socket formed at the socket fastening unit of each battery cell jig, may be switched to satisfy the rated voltage condition of the battery cell. For example, when the rated voltage of the battery cell is small, it is possible to adjust the connection relation to correspond to the applied voltage of the power supply unit by increasing the number of battery cells connected in series.

### [Detailed Description of the Preferred Embodiments]

Although preferred examples of the present invention will be described with reference to drawings, it can be understood that those skilled in the art can make various modifications and changes to the present invention without departing from the spirit and scope of the invention as set forth in the claims below.

### (First embodiment)

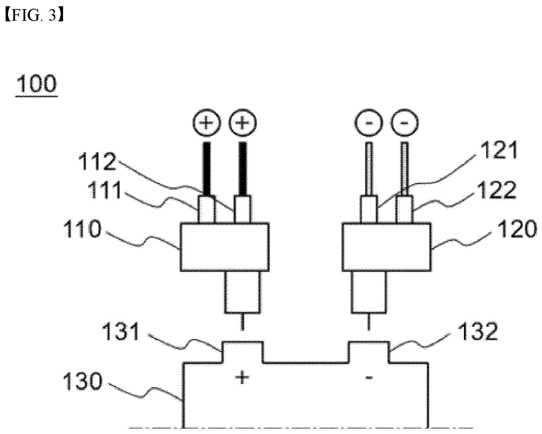

FIG. 3 is a schematic diagram showing a structure of fastening a power terminal which connects an external power source to a socket fastening unit in a jig for charging and discharging a battery cell according to one embodiment of the present invention. Referring to FIG. 3, the jig 100 for charging and discharging a battery cell according to the present invention includes a battery cell 130 accommodated in a fixing unit, and first and second terminal portions 131 and 132 which are electrically connected to first and second electrode leads. Further, the first and second socket fastening units 110 and 120 are fastened to the first and second terminal portions 131 and 132, respectively. 2 connection sockets are formed in the first socket fastening unit 110, and first and second connection terminals 111 and 112 are fastened to each connection socket. The first connection terminal 111 is electrically connected to (+) terminal of the power supply unit, and the second connection terminal 112 is electrically connected to another jig in parallel. Further, 2 connection sockets are formed in the second socket fastening unit 120, and third and fourth connection terminals 121 and 122 are fastened to each connection socket. The third connection terminal 121 is electrically connected to (-) terminal of the power supply unit, and the fourth connection terminal 122 is electrically connected to another jig in parallel.

### (Second embodiment)

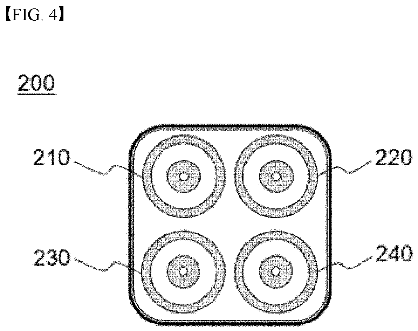

FIG. 4 is a plan view showing a socket fastening unit in a jig for charging and discharging a battery cell according to one embodiment of the present invention. Referring to FIG. 4, in a jig for charging and discharging a battery cell according to the present invention, connection sockets 210, 220, 230 and 240 are formed at the other end of a socket fastening unit 200. 2 connection sockets 210 and 220 at the upper end of the socket fastening unit 200 are sockets for serial connection, and 2 connection sockets 230 and 240 at the lower end of the socket fastening unit 200 are sockets for parallel connection. One of the sockets for serial connection is fastened to the power supply unit, and another of the sockets for serial connection is electrically connected to another jig in series. Further, the socket for parallel connection may be electrically connected to another jig in parallel. Each of the connection sockets 210, 220, 230 and 240 formed at the socket fastening unit has a groove for fastening an external terminal of an electric connection pin type.

### [Description of reference numerals]

10, 100: jig for charging and discharging battery cell
11: first power terminal
12: second power terminal
20, 130: battery cell
21, 131: first terminal portion
22, 132: second terminal portion
110: first socket fastening unit
120: second socket fastening unit
111: first connection terminal
112: second connection terminal
121: third connection terminal
122: fourth connection terminal
200: socket fastening unit
210, 220, 230, 240: connection socket

## Claims

1. A jig (100) for charging and discharging a battery cell (130), the jig (100) comprising:
a fixing unit which fixes the battery cell (130);
first and second terminal portions (131; 132) which are electrically connected to first and second electrode leads of the fixed battery cell (130), respectively; and
a socket fastening unit (110; 120; 200) which has one end fastened to the first terminal portion (131) or the second terminal portion (132), and the other end having two or more connection sockets (210; 220; 230; 240) to be electrically connected to an external side,
wherein at least one electrical connection pin is formed at the one end of the socket fastening unit (110; 120; 200), and
wherein at least one groove for accommodating the electrical connection pin is formed at the other end of the socket fastening unit (110; 120; 200).

2. The jig (100) of claim 1, wherein at least one of the connection sockets (210; 220; 230; 240) is a socket for serial connection and at least one of the connection sockets (210; 220; 230; 240) is a socket for parallel connection.

3. The jig (100) of claim 2, wherein the socket for serial connection is electrically connected to another battery cell (130) in series or is electrically connected to the power supply unit, and
wherein the socket for parallel connection is electrically connected to anther battery cell (130) in parallel.

4. The jig (100) of claim 2, wherein the socket fastening unit (110; 120; 200) includes a number of p sockets for serial connection and a number of q sockets for parallel connection as the connection sockets (210; 220; 230; 240),
wherein the p is a positive integer between 1 and 20, and
wherein the q is a positive integer between 1 and 20.

5. The jig (100) of claim 1, wherein the one end of the socket fastening unit is fastened to the first terminal portion of the battery cell fixed at the fixing unit, and wherein connection sockets (210; 220; 230; 240) formed at the other end of the socket fastening unit include one or more sockets for serial connection and one or more sockets for parallel connection, which satisfy at least one of:
a condition that at least one of the sockets for serial connection is electrically connected to a power supply unit;
a condition that at least one of the sockets for serial connection is electrically connected to a second terminal portion (132) of another battery cell (130) adjacent to the battery cell (130); and
a condition that at least one of the sockets for parallel connection is electrically connected to a first terminal portion (131) of another battery cell (130) adjacent to the battery cell (130).

6. The jig (100) of claim 1, wherein the fixing unit presses two surfaces of the battery cell (130) through a pressing plate, and
wherein the first and second terminal portions (131; 132) are electrically connected to first and second electrode leads, respectively, in a state that the first and second electrode leads of the battery cell (130) are fixed.

7. The jig (100) of claim 1, wherein the fixing unit presses two surfaces of the battery cell (130) through a pressing plate, and further includes at least one of:
a pressure sensor which measures pressure of the battery cell (130); and
a temperature sensor which measures a temperature of the battery cell (130).

8. A system for charging and discharging a battery cell (130), the system comprising:
a number of n jigs (100) for charging and discharging a battery cell (130) according to claim 1; and
the power supply unit,
wherein the n is a positive integer equal to or greater than 2.

9. The system of claim 8, wherein the number of n jigs (100) are arranged in series or in parallel in a state that has accommodated battery cells (130).

10. The system of claim 8, wherein the power supply unit is a single power source, and
wherein the number of n jigs (100) are electrically connected to each other in at least one of a serial connection scheme and a parallel connection scheme in a state that has accommodated battery cells (130).

11. The system of claim 8, wherein a power connection line, which is fastened to the connection socket (210; 220; 230; 240) formed at the socket fastening unit (110; 120; 200) of each jig (100), is switched to satisfy a rated voltage condition of the battery cell (130).

## Patentansprüche

1. Spannvorrichtung (100) zum Laden und Entladen einer Batteriezelle (130), wobei die Spannvorrichtung (100) aufweist:
eine Befestigungseinheit, die die Batteriezelle (130) befestigt;
einen ersten Anschlussabschnitt (131) und einen zweiten Anschlussabschnitt (132), die mit einer ersten Elektrodenleitung bzw. einer zweiten Elektrodenleitung der befestigten Batteriezelle (130) elektrisch verbunden sind; und
eine Buchsenbefestigungseinheit (110; 120; 200), von welcher ein Ende an dem ersten Anschlussabschnitt (131) oder dem zweiten Anschlussabschnitt (132) befestigt ist und das andere Ende zwei oder mehr Verbindungsbuchsen (210; 220; 230; 240) aufweist, die mit einer Außenseite elektrisch zu verbinden sind,
wobei wenigstens ein elektrischer Verbindungsstift an dem einen Ende der Buchsenbefestigungseinheit (110; 120; 200) ausgebildet ist, und
wobei wenigstens eine Nut zum Aufnehmen des elektrischen Verbindungsstifts an dem anderen Ende der Buchsenbefestigungseinheit (110; 120; 200) ausgebildet ist.

2. Spannvorrichtung (100) nach Anspruch 1, wobei wenigstens eine der Verbindungsbuchsen (210; 220; 230; 240) eine Buchse für eine Verbindung in Serie ist und wenigstens eine der Verbindungsbuchsen (210; 220; 230; 240) eine Buchse für eine parallele Verbindung ist.

3. Spannvorrichtung (100) nach Anspruch 2, wobei die Buchse für eine serielle Verbindung mit einer anderen Batteriezelle (130) in Reihe elektrisch verbunden ist oder mit der Stromversorgungseinheit elektrisch verbunden ist, und
wobei die Buchse für eine parallele Verbindung elektrisch parallel mit der anderen Batteriezelle (130) verbunden ist.

4. Spannvorrichtung (100) nach Anspruch 2, wobei die Buchsenbefestigungseinheit (110; 120; 200) eine Anzahl von p Buchsen für eine serielle Verbindung und eine Anzahl von q Buchsen für eine parallele Verbindung als die Verbindungsbuchsen (210; 220; 230; 240) umfasst,
wobei p eine positive ganze Zahl zwischen 1 und 20 ist, und
wobei q eine positive ganze Zahl zwischen 1 und 20 ist.

5. Spannvorrichtung (100) nach Anspruch 1, wobei das eine Ende der Buchsenbefestigungseinheit an dem ersten Anschlussabschnitt der Batteriezelle befestigt ist, der an der Befestigungseinheit befestigt ist, und wobei Verbindungsbuchsen (210; 220; 230; 240), die an dem anderen Ende der Buchsenbefestigungseinheit ausgebildet sind, eine oder mehrere Buchsen für eine serielle Verbindung und eine oder mehrere Buchsen für eine parallele Verbindung umfassen, welche wenigstens eines der Folgenden erfüllen:
eine Bedingung, dass wenigstens eine der Buchsen für eine serielle Verbindung elektrisch mit einer Stromversorgungseinheit verbunden ist;
eine Bedingung, dass wenigstens eine der Buchsen für eine Verbindung in Reihe elektrisch mit einem zweiten Anschlussabschnitt (132) einer anderen Batteriezelle (130) benachbart zu der Batteriezelle (130) verbunden ist; und
eine Bedingung, dass wenigstens eine der Buchsen für eine parallele Verbindung elektrisch mit einem ersten Anschlussabschnitt (131) einer anderen Batteriezelle (130) benachbart zu der Batteriezelle (130) verbunden ist.

6. Spannvorrichtung (100) nach Anspruch 1, wobei die Befestigungseinheit Druck auf zwei Oberflächen der Batteriezelle (130) durch eine Druckplatte ausübt, und
wobei der erste Anschlussabschnitt (131) und der zweite Anschlussabschnitt (132) mit einer ersten Elektrodenleitung bzw. einer zweiten Elektrodenleitung in einem Zustand elektrisch verbunden sind, in welchem die erste Elektrodenleitung und die zweite Elektrodenleitung der Batteriezelle (130) befestigt sind.

7. Spannvorrichtung (100) nach Anspruch 1, wobei die Befestigungseinheit Druck auf zwei Oberflächen der Batteriezelle (130) durch eine Druckplatte ausübt, und ferner wenigstens eines der Folgenden umfasst:
einen Drucksensor, der einen Druck der Batteriezelle (130) misst; und
einen Temperatursensor, der eine Temperatur der Batteriezelle (130) misst.

8. System zum Laden und Entladen einer Batteriezelle (130), wobei das System aufweist:
eine Anzahl von n Spannvorrichtungen (100) zum Laden und Entladen einer Batteriezelle (130) nach Anspruch 1; und
die Stromversorgungseinheit,
wobei n eine positive ganze Zahl gleich oder größer als 2 ist.

9. System nach Anspruch 8, wobei die Anzahl von n Spannvorrichtungen (100) in Reihe oder parallel in einem Zustand angeordnet sind, in dem Batteriezellen (130) aufgenommen sind.

10. System nach Anspruch 8, wobei die Stromversorgungseinheit eine einzelne Stromquelle ist, und
wobei die Anzahl von n Spannvorrichtungen (100) in wenigstens einem von einem Verbindungsschema in Reihe und einem parallelen Verbindungsschema in einem Zustand, in dem Batteriezellen (130) aufgenommen sind, elektrisch miteinander verbunden sind.

11. System nach Anspruch 8, wobei eine Stromverbindungsleitung, die an der Verbindungsbuchse (210; 220; 230; 240) befestigt ist, die an der Buchsenbefestigungseinheit (110; 120; 200) jeder Spannvorrichtung (100) ausgebildet ist, geschaltet wird, um eine Nennspannungsbedingung der Batteriezelle (130) zu erfüllen.

## Revendications

1. Dispositif (100) pour charger et décharger une cellule de batterie (130), le dispositif (100) comprenant :
une unité de fixation fixant la cellule de batterie (130) ;
des première et deuxième parties de borne (131 ; 132) connectées électriquement aux premier et deuxième fils d'électrode de la cellule de batterie fixe (130), respectivement ; et
un dispositif de fixation de prise (110 ; 120 ; 200) possédant un bout fixé à la première partie de borne (131) ou à la deuxième partie de borne (132), l'autre bout possédant deux ou plusieurs connecteurs femelle (210 ; 220 ; 230 ; 240) se connectant électriquement à un côté externe,
au moins une broche de connexion électrique étant formée à l'une extrémité du dispositif de fixation de prise (110 ; 120 ; 200), et
au moins une cannelure pouvant recevoir la broche de connexion électrique étant formée à l'autre extrémité du dispositif de fixation de prise (110 ; 120 ; 200).

2. Dispositif (100) selon la revendication 1, au moins un des connecteurs femelles (210 ; 220 ; 230 ; 240) étant une prise pour la connexion série et au moins un des connecteurs femelles (210 ; 220 ; 230 ; 240) étant une prise pour la connexion parallèle.

3. Dispositif (100) selon la revendication 2, la prise pour la connexion série étant connectée électriquement à une autre cellule de batterie (130) en série ou étant connectée électriquement au bloc d'alimentation, et
a prise pour la connexion parallèle étant connectée électriquement à une autre cellule de batterie (130) en parallèle.

4. Dispositif (100) selon la revendication 2, le dispositif de fixation de prise (110 ; 120 ; 200) comprenant un certain nombre de prises p pour une connexion série et un certain nombre de prises q pour une connexion parallèle en tant que connecteurs femelles (210 ; 220 ; 230 ; 240),
p étant un entier positif entre 1 et 20, et
q étant un entier positif entre 1 et 20.

5. Dispositif (100) selon la revendication 1, l'un bout du dispositif de fixation de prise étant fixé à la première partie de borne de la cellule de la batterie fixée sur l'unité de fixation, et des connecteurs femelles (210 ; 220 ; 230 ; 240) formés à l'autre bout du dispositif de fixation de prise comprenant une ou plusieurs prises pour une connexion série et une ou plusieurs prises pour une connexion parallèle, répondant à au moins un des suivants :
un état dans le cadre duquel au moins une des connexions série est connectée électriquement à un bloc d'alimentation ;
un état dans le cadre duquel au moins une des prises pour une connexion série est connectée électriquement à une deuxième partie de borne (132) d'une autre cellule de batterie (130) adjacente à la cellule de batterie (130) ; et
un état dans le cadre duquel au moins une des prises pour une connexion parallèle est connectée électriquement à une première partie de borne (131) d'une autre cellule de batterie (130) adjacente à la cellule de batterie (130).

6. Dispositif (100) selon la revendication 1, l'unité de fixation appuyant deux surfaces de la cellule de batterie (130) à travers une plaque de pression, et
les première et deuxième parties de borne (131 ; 132) étant connectées électriquement aux premier et deuxième fils d'électrode respectivement, dans un état où les premier et deuxième fils d'électrode de la cellule de batterie (130) sont fixes.

7. Dispositif (100) selon la revendication 1, l'unité de fixation appuyant deux surfaces de la cellule de batterie (130) à travers une plaque de pression, et comprenant en outre au moins un des suivants:
un capteur de pression mesurant la pression de la cellule de batterie (130) ; et
une sonde thermométrique mesurant une température de la cellule de batterie (130).

8. Système (130) pour charger et décharger une cellule de batterie (130), le système (100) comprenant :
un nombre de dispositifs n (100) pour charger et décharger une cellule de batterie (130) selon la revendication 1 ; et
le bloc d'alimentation,
n étant un entier positif égal ou supérieur à 2.

9. Système selon la revendication 8, le nombre de dispositifs n (100) étant agencé en série ou en parallèle dans un état où sont logées des cellules de batterie (130).

10. Système selon la revendication 8, le bloc d'alimentation étant une source d'énergie unique, et
le nombre de dispositifs n (100) étant connectés électriquement entre eux dans au moins un d'un système de connexion série et d'un système de connexion parallèle, dans un état où sont logées des cellules de batterie (130).

11. Système selon la revendication 8, dans lequel une ligne de connexion électrique, fixée au connecteur femelle (210 ; 220 ; 230 ; 240) formé au dispositif de fixation de prise (110 ; 120 ; 200) de chaque dispositif (100), est commutée pour remplir une condition de tension nominale de la cellule de batterie (130).
